# EUROPÄISCHE PATENTSCHRIFT

(11) **EP 1 946 884 B1**
(45) Veröffentlichungstag und Bekanntmachung des Hinweises auf die Patenterteilung: **24.12.2008**
(21) Anmeldenummer: 07001239.8
(22) Anmeldetag: 20.01.2007
(51) Int. Cl.: B23Q 1/76

(54) **Lünette**
Stationary support
Lunette

(43) Veröffentlichungstag der Anmeldung: 23.07.2008
(73) Patentinhaber: SMW-Autoblok Spannsysteme GmbH, 88074 Meckenbeuren (DE)
(72) Erfinder: Rehm, Fritz, 88094 Oberteuringen (DE)
(74) Vertreter: Engelhardt, Guido

(56) Entgegenhaltungen:
- DE-U1- 20 012 710

## Beschreibung

Die Erfindung bezieht sich auf eine Lünette zum zentrischen Spannen von stangenförmigen Werkstücken kreisförmigen Durchmessers auf einer Drehmaschine mit drei in einer gemeinsamen Ebene angeordneten, mit Laufrollen versehenen Haltegliedern, von denen die beiden äußeren Halteglieder um in einem Gehäuse gelagerte Gelenkbolzen verschwenkbar sind und das mittlere Halteglied relativ zum Werkstück geradlinig verstellbar ist, wobei an einem oder den beiden äußeren Halteglieder jeweils eine Späneschutzkappe angebracht ist, die mit einer Abstreifleiste versehen und zwischen der und der Laufrolle über in die Späneschutzkappe eingearbeitete Austrittskanäle gesteuert Spülmittel dem Werkstück zuführbar ist,

Aus der DE 200 12 710 U 1 ist eine gattungsbildende Lünette bekannt. Es ist bei dieser Ausgestaltung jedoch von Nachteil, dass nur zwischen der Abstreifleiste und der Laufrolle dem Werkstück Spülmittel zugeführt wird. Der Bereich vor der Abstreifleiste, auf dem sich Späne und Schmutzteile sammeln können, wird dagegen nicht gespült. Dies kann dazu führen, dass sich Metallteile zwischen der Abstreifleiste und dem Werkstück verklemmen und dieses und/oder die Laufrollen und/oder die Abstreifleiste beschädigt werden.

Aufgabe der Erfindung ist es daher, die Lünette der eingangs genannten Gattung in der Weise weiterzubilden, dass beiderseits der Abstreifleiste dem Werkstück Spülmittel zugeführt werden kann, so dass Ablagerungen und dadurch bedingte Beschädigungen des Werkstückes zuverlässig vermieden werden. Ferner soll eine Einstellung der Lage der Abstreifleiste auf Werkstücke mit unterschiedlichen Durchmessern in kurzer Zeit zu bewerkstelligen sein. Der dazu erforderliche Bauaufwand soll gering gehalten werden, dennoch soll stets eine zuverlässige Spülmittelzuführung auf beide Seiten der Abstreifleiste ermöglicht werden.

Gemäß der Erfindung wird dies bei einer Lünette der vorgenannten Art dadurch erreicht, dass die Abstreifleiste in die Späneschutzkappe integriert ist und dass in der Abstreifleiste oder in dem äußeren Randbereich der Späneschutzkappe, der auf der der Laufrolle abgewandten Seite der Abstreifkante angeordnet ist, jeweils ein oder mehrere Austrittskanäle vorgesehen sind, die etwa parallel zu den Austrittskanälen der Späneschutzkappe gerichtet und an diese oder deren Zuführungskanäle angeschlossen sind.

Nach einer vorteilhaften Ausgestaltung ist die Abstreifleiste auf die Späneschutzkappe aufgesetzt und mit dieser verschiebbar verbunden, wobei die Abstreifleiste im äußeren Bereich auf der dem Werkstück zugekehrten Stirnseite freigespart ist und die Austrittsöffnungen in dem abgesetzten Teil der Abstreifleiste eingearbeitet sind.

Zweckmäßig ist es hierbei des Weiteren, die Zuführungskanäle der Abstreifleiste über in die einander zugekehrten Stirnflächen der Späneschutzkappe und/oder der Abstreifleiste eingearbeitete Freisparungen an die in der Späneschutzkappe vorgesehenen Zuführungskanäle anzuschließen und die in der Abstreifleiste eingearbeiteten Austrittskanäle und/oder die in der Späneschutzkappe vorgesehenen Zuführungskanäle durch Bohrungen zu bilden, die auf der dem Werkstück abgekehrten Seite, z.B. durch Stopfen, verschlossen sind.

Zur Verstellung der Abstreifleiste ist es angebracht, diese mittels eingearbeitete Langlöcher durchgreifender Schrauben an der Späneschutzkappe verschiebbar zu befestigen.

Nach einer andersartigen Ausführungsvarianten kann die Abstreifleiste in Richtung des Werkstückes vorzugsweise radial zu einem Grundkreis verschiebbar in einer in die Späneschutzkappe eingearbeiteten im Querschnitt schlitzartig gestalteten Ausnehmung eingesetzt sein.

Bei dieser Ausgestaltung ist es angebracht, die Späneschutzkappe auf einer oder beiden Längsseiten bis zur Auflage der Abstreifleiste auf der Späneschutzkappe freizusparen und in diesen Bereichen in die Späneschutzkappe Gewindebohrungen einzuarbeiten, in denen mittels in die Abstreifkappe eingearbeiteter Langlöcher durchgreifender Schrauben diese gehalten ist.

Auch hierbei ist es angezeigt, die Stirnfläche des äußeren die Ausnehmung begrenzenden Teils der Späneschutzkappe gegenüber der Stirnfläche des inneren Teils in Richtung auf das Werkstück zurückgesetzt auszubilden.

Bei mehreren in der Abstreifleiste und/oder in der Späneschutzkappe vorgesehenen Austrittskanälen ist es vorteilhaft, deren Zuführungskanäle durch eine vorzugsweise unmittelbar nach dem Übergang von dem Halteglied in die Späneschutzkappe angeordnete Querbohrung miteinander zu verbinden.

Auch können die in der Späneschutzkappe und/oder der Abstreifleiste vorgesehenen Austrittskanäle jeweils mit einer Zerstäuberdüse versehen sein.

Wird eine Lünette gemäß der Erfindung ausgebildet, indem die Abstreifleiste in die Abdeckkappe integriert und verstellbar befestigt wird und werden zusätzliche Austrittskanäle vorgesehen, die unmittelbar auf die Abstreifkante der Abstreifleiste gerichtet sind, ist sicher gestellt, dass diese ohne Schwierigkeiten an ein jeweils zu bearbeitendes Werkstück ausgerichtet werden kann und dass auf keiner der beiden Seiten der Abstreifleiste Ablagerungen an dieser haften. Spülmittel kann nämlich in einem ausreichenden Maße über die in der Späneschutzkappe und der Abstreifleiste vorgesehenen Austrittskanäle gezielt in den Bereich gespült werden, in dem es benötigt wird. Beschädigungen eines Werkstückes sowie ein hoher Verschleiß an der Abstreifleiste und/oder den Laufrollen durch an der Abstreifleiste haftende Späne werden somit zuverlässig vermieden, so dass durch die vorschlagsgemäße Gestaltung das Betriebsverhalten einer Lünette weiter verbessert wird.

ln der Zeichnung sind zwei Ausführungsbeispiele der gemäß der Erfindung ausgebildeten Lünette dargestellt, die nachfolgend im Einzelnen erläutert sind. Hierbei zeigt:
- Figur 1: ein Halteglied einer Lünette mit Späneschutzkappe und Abstreifleiste, in einer perspektivischen Darstellung,
- Figur 2: die auf dem Halteglied aufgesetzte Späneschutzkappe mit Abstreifleiste nach Figur 1, im Längsschnitt,
- Figur 3: die Späneschutzkappe nach Figur 1, ohne Abstreifleiste,
- Figur 4: eine andersartige Ausgestaltung der Späneschutzkappe, in einer Darstellung nach Figur 1, und
- Figur 5: die auf dem Halteglied aufgesetzte Späneschutzkappe mit integrierter Abstreifleiste nach Figur 4, in einem Längsschnitt.

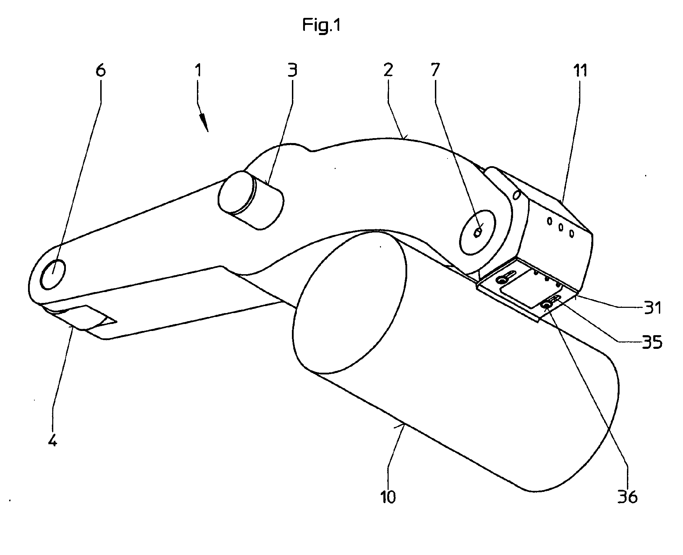

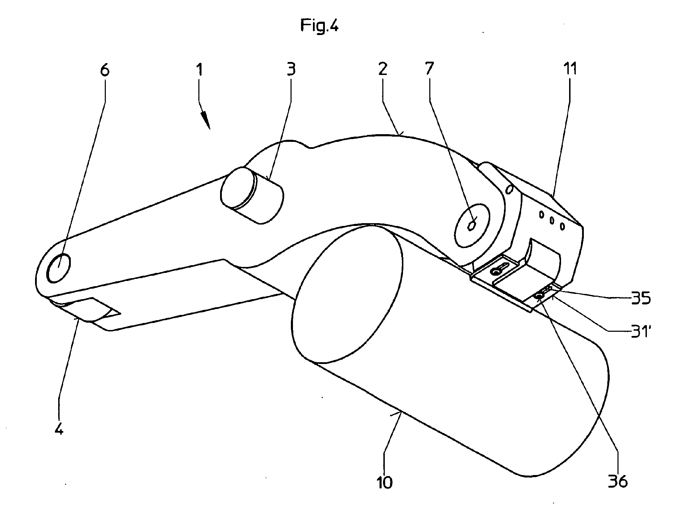

Die in den Figuren 1 und 4 teilweise dargestellte und jeweils mit 1 bezeichnete Lünette dient zum zentrischen Spannen von stangenförmigen Werkstücken 10 mit kreisförmigem Durchmesser auf einer Drehmaschine und beseht im wesentlichen aus drei in einer gemeinsamen Ebene angeordneten Haltegliedern 2, von denen nur eines der beiden äußeren Halteglieder gezeigt ist, die das Werkstück 10 abstützen. Die beiden äußeren Halteglieder 2 sind um in einem Gehäuse gelagerte Gelenkbolzen 3 verschwenkbar, das mittlere Halteglied ist dagegen relativ zum Werkstück 10 geradlinig verstellbar. Die Schwenkbewegungen der beiden äußeren Halteglieder 2 werden durch ein Verstellglied bewirkt, das an dem mittleren Halteglied angebracht ist und an dem die Halteglieder 3 mittels Rollen 4, die auf Bolzen 6 gelagert sind, anliegen. Über weitere ebenfalls auf Bolzen 7 gelagerte Rollen 5 wirken die Halteglieder 2 auf das Werkstück 10 ein.

Auf dem Halteglied 2 ist eine Späneschutzkappe 11 angebracht, um das Eindringen von Spänen in eine die Rolle 5 aufnehmende Ausnehmung des Haltegliedes 2 und die Lagerstellen des Bolzens 7 zu verhindern. Außerdem ist eine unterschiedlich ausgebildete und in die Späneschutzkappe 11 integrierte Abstreifleiste 31 bzw. 31' vorgesehen, mittels der an dem Werkstück 10 unter Umständen haftende Späne oder sonstige Verunreinigungen abgestreift werden.

Um zu vermeiden, dass sich an der Abstreifleiste 31 bzw. 31' und/oder dem Werkstück 10 Ablagerungen bilden, wird diesem Spülmittel zugeführt. Dazu ist in der Späneschutzkappe 11, die mittels Schrauben 12 an dem Halteglied 2 befestigt ist, ein Kanal 13 eingearbeitet, in den das Spülmittel aus einem in dem Halteglied 2 vorgesehenen Kanal 8 übergeführt wird. Über einen Querkanal 14 strömt das Spülmittel in drei in der Späneschutzkappe 11 eingebohrte Kanäle 15, 15' und 15" zu Austrittskanälen 16, 16' und 16",aus denen das Spülmittel in den Bereich zwischen der Rolle 5 und der Abstreifleiste 31 austritt.

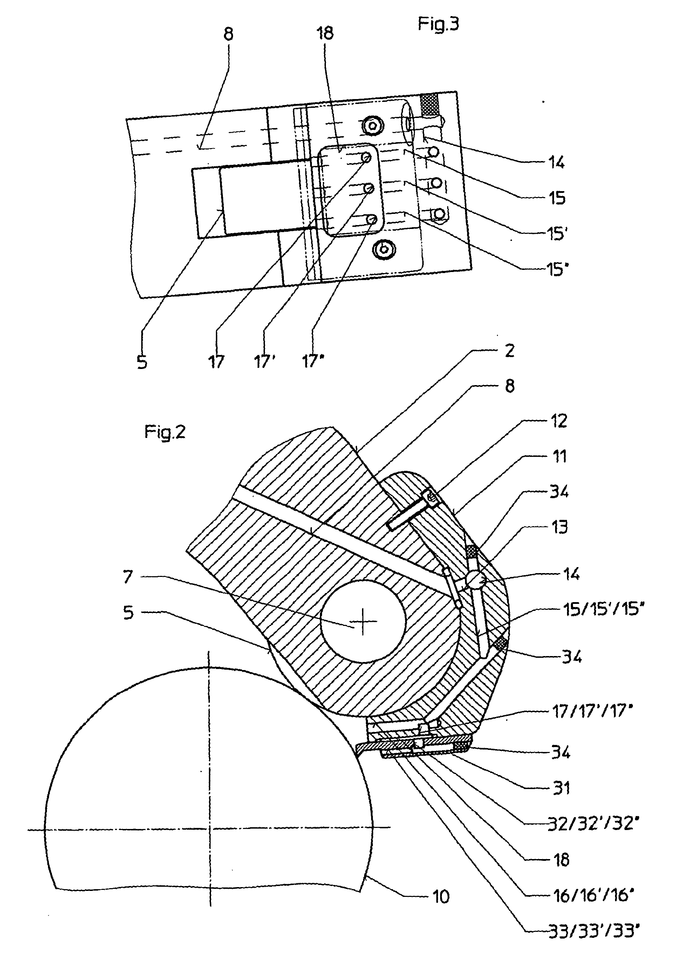

Bei der Ausgestaltung nach den Figuren 1 bis 3 ist die Abstreifleiste 31 auf der Späneschutzkappe 11 aufgesetzt und mittels Schrauben 36, die Langlöcher 35 durchgreifen, verschiebbar befestigt. Außerdem sind auch in der Abstreifleiste 31 drei Austrittskanäle 33, 33' und 33" eingearbeitet, denen Spülmittel aus den Kanälen 15, 15' und 15" oder den Austrittskanälen 16, 16' und 16" zugeführt wird. Um dies zu bewerkstelligen, sind in die Späneschutzkappe 11 drei Kanäle 17, 17' und 17" und eine rechteckige Vertiefung oder Freisparung 18 eingearbeitet, an die über Bohrungen 32, 32' und 32" die Austrittskanäle 33, 33' und 33" angeschlossen sind. Die Abstreifkante der Abstreifleiste 31 wird somit auf beiden Seiten mit Spülmittel beaufschlagt, Ablagerungen werden dadurch zuverlässig abgespült.

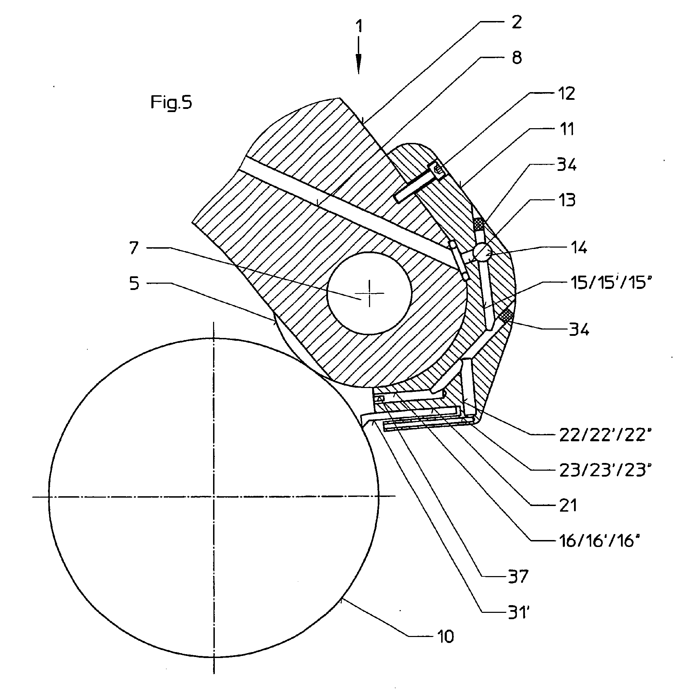

Bei der Ausführungsvarianten nach den Figuren 4 und 5 ist die Abstreifleiste 31' in eine schlitzartige in die Späneschutzkappe 11 eingearbeitete Ausnehmung 21 eingesetzt und wiederum mittels Schrauben 36, die Langlöcher 35 durchgreifen, arretiert. Die Abstreifleiste 31' ist somit ebenfalls in Richtung des Werkstückes 10 verstellbar, so dass ohne weiteres Anpassungen an Werkstücke mit unterschiedlichen Durchmessern vorgenommen werden können. Um dies zu ermöglichen, ist die Späneschutzkappe 11 im Bereich der Abstreifleiste 31' seitlich freigespart.

Die Zuführung von Spülmittel zu der Abstreifkante der Abstreifleiste 31' erfolgt hierbei mittels weiterer in die Späneschutzkappe 11 eingearbeiteter Austrittskanäle 23, 23' und 23"; die etwa parallel zu den Austrittskanälen 16, 16' und 16" verlaufen und die über Kanäle 22, 22' und 22" mit den Kanälen 15, 15' und 15" verbunden sind. Spülmittel wird demnach auch bei dieser Ausführungsform beiderseits der Abstreifkante der Abstreifleiste 31' versprüht.

Die in die Späneschutzkappe 11 und/oder Abstreifleiste 31 eingearbeiteten Kanäle können auf einfache Weise durch Bohrungen gebildet werden, die teilweise durch Stopfen 34 zu verschließen sind. Des Weiteren können die Austrittskanäle 16, 16' und 16" bzw. 23, wie dies in Figur 5 gezeigt ist, um den Spritzstrahl zu konzentrieren, mit Zersträuberdüsen 37 versehen sein.

## Patentansprüche

1. Lünette (1) zum zentrischen Spannen von stangenförmigen Werkstücken (10) kreisförmigen Durchmessers auf einer Drehmaschine mit drei in einer gemeinsamen Ebene angeordneten, mit Laufrollen (5) versehenen Haltegliedern (2), von denen die beiden äußeren Halteglieder um in einem Gehäuse gelagerte Gelenkbolzen (3) verschwenkbar sind und das mittlere Halteglied relativ zum Werkstück (10) geradlinig verstellbar ist, wobei an einem oder den beiden äußeren Halteglieder (2) jeweils eine Späneschutzkappe (11) angebracht ist, die mit einer Abstreifleiste (31) versehen und zwischen dieser und der Laufrolle (5) über in die Späneschutzkappe (11) eingearbeitete Austrittskanäle (16, 16', 16") gesteuert Spülmittel dem Werkstück (10) zuführbar ist,
**dadurch gekennzeichnet,**
**dass** die Abstreifleiste (31, 31') in die Späneschutzkappe (11) integriert ist und dass in der Abstreifleiste (31) oder dem äußeren Randbereich der Späneschutzkappe (11), der auf der der Laufrolle (5) abgewandten Seite der Abstreifkante (31, 31') angeordnet ist, jeweils ein oder mehrere Austrittskanäle (33, 33', 33" bzw. 23) vorgesehen sind, die etwa parallel zu den Austrittskanälen (16, 16', 16") der Späneschutzkappe (11) gerichtet und an diese oder deren Zuführungskanäle (15, 15', 15") angeschlossen sind.

2. Lünette nach Anspruch 1,
**dadurch gekennzeichnet,**
**dass** die Abstreifleiste (31) auf die Späneschutzkappe (11) aufgesetzt und mit dieser verschiebbar verbunden ist.

3. Lünette nach Anspruch 2,
**dadurch gekennzeichnet,**
**dass** die Abstreifleiste (31) im äußeren Bereich auf der dem Werkstück (10) zugekehrten Stirnseite freigespart ist und dass die Austrittsöffnungen (33, 33', 33") in dem abgesetzten Teil der Abstreifleiste (31) eingearbeitet sind.

4. Lünette nach Anspruch 2 oder 3.
**dadurch gekennzeichnet,**
**dass** die Zuführungskanäle (32, 32', 32") der Abstreifleiste (31') über eine in die einander zugekehrten Stirnflächen der Späneschutzkappe (11) und/oder der Abstreifleiste (31) eingearbeitete Freisparung (18) an die in der Späneschutzkappe (11) vorgesehenen Zuführungskanäle (16, 16', 16", 17, 17', 17") angeschlossen sind.

5. Lünette nach einem
der Ansprüche 2 bis 4,
**dadurch gekennzeichnet,**
**dass** die in der Abstreifleiste (31) eingearbeiteten Austrittskanäle (33, 33', 33") und/oder die in der Späneschutzkappe (11) vorgesehenen Zuführungskanäle (15, 15', 15") durch Bohrungen gebildet sind, die auf der dem Werkstück (10) abgekehrten Seite, z.B. durch Stopfen (34), verschlossen sind.

6. Lünette nach einem
der Ansprüche 1 bis 5,
**dadurch gekennzeichnet,**
**dass** die Abstreifleiste (31) mittels in diese eingearbeitete Langlöcher (35) durchgreifender Schrauben (36) an der Späneschutzkappe (11) verschiebbar befestigt ist.

7. Lünette nach Anspruch 1,
**dadurch gekennzeichnet,**
**dass** die Abstreifleiste (31') in Richtung des Werkstückes (10) vorzugsweise radial zu einem Grundkreis verschiebbar in einer in die Späneschutzkappe (11) eingearbeiteten im Querschnitt schlitzartig gestalteten Ausnehmung (21) eingesetzt ist.

8. Lünette nach Anspruch 7,
**dadurch gekennzeichnet,**
**dass** die Späneschutzkappe (11) auf einer oder beiden Längsseiten bis zur Auflage der Abstreifleiste (31') auf der Späneschutzkappe (11) freigespart ist und dass in diesen Bereichen in die Späneschutzkappe (11) Gewindebohrungen eingearbeitet sind, in denen mittels in die Abstreifkappe (31') eingearbeiteter Langlöcher (35) durchgreifender Schrauben (36) diese gehalten ist.

9. Lünette nach Anspruch 8 oder 7,
**dadurch gekennzeichnet,**
**dass** die Stirnfläche des äußeren die Ausnehmung (21) begrenzenden Teils der Späneschutzkappe (11) gegenüber der Stirnfläche des inneren Teils in Richtung auf das Werkstück (10) zurückgesetzt ausgebildet ist.

10. Lünette nach einem
der Ansprüche 1 bis 9,
**dadurch gekennzeichnet,**
**dass** bei mehreren in der Abstreifleiste (31) und/oder in der Späneschutzkappe (11) vorgesehenen Austrittskanälen (33, 33', 33" bzw. 16, 16', 16") deren Zuführungskanäle (15, 15', 15") durch eine vorzugsweise unmittelbar nach dem Übergang von dem Halteglied (2) in die Späneschutzkappe (11) angeordnete Querbohrung (14) miteinander verbunden sind.

11. Lünette nach einem
der Ansprüche 1 bis 10,
**dadurch gekennzeichnet,**
**dass** die in der Späneschutzkappe (11) und/oder der Abstreifleiste (31) vorgesehenen Austrittskanäle (16, 16', 16" bzw. 33, 33', 33") jeweils mit einer Zerstäuberdüse (37) versehen sind.

## Claims

1. A stationary support (1) for central clamping of rod-shaped workpieces (20) with a circular diameter on a lathe with three holding elements (2) arranged in the same plane and provided with rollers (5), of which the two outer holding elements can be swivelled about an articulated pin (3) mounted in a housing and the middle holding element can be adjusted in a straight line in relation to the workpiece (10), with one chip protection cap (11) provided with a scraper strip (31) each attached to one or both outer holding elements (2) and the ability to supply rinsing agent to the workpiece (10) between these and the roller (5) in a controlled fashion via outlet ducts (16, 16', 16") worked into the chip protection cap (11),
**characterised in that,**
the scraper strip (31, 31') is integrated in the chip protection cap (11) and that one or more outlet ducts (33, 33', 33" or 23) are provided in the scraper strip (31) or the outer edge area of the chip protection cap (11) arranged on the side of the scraper edge (31, 31') opposite to the roller (5), which are directed approximately in parallel to the outlet ducts (16, 16', 16") of the chip protection cap (11) and are connected to these or their supply ducts (15, 15', 15").

2. The stationary support in accordance with Claim 1,
**characterised in that,**
the scraper strip (31) is mounted on the chip protection cap (11) and is connected with this in a movable arrangement.

3. The stationary support in accordance with Claim 2,
**characterised in that,**
the scraper strip (31) is chamfered in the outer area on the end facing the workpiece (10), and that the outlet openings (33, 33', 33") are worked into the offset part of the scraper strip (31).

4. The stationary support in accordance with Claim 2 or 3,
**characterised in that,**
the supply ducts (32, 32', 32") of the scraper strip (31') are connected to the supply ducts (16, 16', 16", 17, 17', 17") provided in the chip protection cap (11) via a recess (18) worked into the ends of the chip protection cap (11) facing one another and/or the scraper strip (31).

5. The stationary support in accordance with on of Claims 2 to 4,
**characterised in that,**
the outlet ducts (33, 33', 33") worked into the scraper strip (31) and/or the supply ducts (15, 15', 15") provided in the chip protection cap (11) are formed by holes that are closed on the end facing away from the workpiece (10), e.g. by plugs (34).

6. The stationary support in accordance with one of Claims 1 to 5,
**characterised in that,**
the scraper strip (31) is secured in a movable arrangement on the chip protection cap (11) by means of screws (36) that penetrate slots (35) worked into the scraper strip (31).

7. The stationary support in accordance with Claim 1,
**characterised in that,**
the scraper strip (31') is inserted in an opening (21) with a slot-shaped cross section worked into the chip protection cap (11) and the scraper strip (31') can be moved in the direction of the workpiece (10) radially in relation to a base circle.

8. The stationary support in accordance with Claim 7,
**characterised in that,**
the chip protection cap (11) is chamfered on one or both lengthways sides as far as the support of the scraper strip (31') on the chip protection cap (11) and that threaded holes are worked into the chip protection cap (11) in these areas, in which these are held by screws (36) penetrating slots (35) worked into the scraper cap (31').

9. The stationary support in accordance with Claim 8 or 7,
**characterised in that,**
the end of the outer part of the chip protection cap (11) delimiting the opening (21) is configured with a recess in relation to the end face of the inner part in the direction of the workpiece (10).

10. The stationary support in accordance with on of Claims 1 to 9,
**characterised in that,**
when there are several outlet ducts (33, 33', 33" or 16, 16', 16") provided in the scraper strip (31) and/or in the chip protection cap (11), their supply ducts (15, 15', 15") are connected together by a crossways hole (14) preferably arranged directly after the transition from the holding element (2) into the chip protection cap (11).

11. The stationary support in accordance with Claims 1 to 10,
**characterised in that,**
each of the outlet ducts (16, 16', 16" or 33, 33', 33") provided in the chip protection cap (11) and/or in the scraper strip (31) is provided with an atomiser nozzle (37).

## Revendications

1. Lunette (1) pour le serrage centré de pièces à usiner sous la forme de barres (10) au diamètre circulaire, sur un tour muni de trois éléments de retenue (2) disposés dans un plan commun et équipés de galets (5), dont les deux éléments de retenue extérieurs se laissent pivoter autour de boulons articulés (3) logés dans un boîtier et dont l'élément de retenue central se laisse déplacer en ligne droite relativement à la pièce à usiner (10), où, sur un ou sur les deux éléments de retenue extérieurs (2), il est prévue respectivement un capot de protection contre les copeaux (11) qui possède une réglette racleuse (31) et où, entre celle-ci et le galet (5), du liquide de rinçage se laisse diriger vers la pièce à usiner (10) par des canaux de sortie (16, 16', 16") pratiqués dans le capot de protection (11),
**caractérisée en ce que**
la réglette racleuse (31, 31') est intégrée dans le capot de protection (11) et que dans la réglette racleuse (31) ou à l'endroit extérieur du capot de protection (11) qui est disposé sur la réglette racleuse (31, 31') sur la face éloignée du galet (5), il est prévu respectivement un ou plusieurs canaux de sortie (33, 33', 33" ou 23) qui sont dirigés à peu près parallèlement aux canaux de sortie (16, 16', 16") du capot de protection (11) et qui se laissent raccorder sur ceux-ci ou sur leurs canaux d'arrivée (15, 15', 15").

2. Lunette d'après la revendication 1,
**caractérisée en ce que**
la réglette racleuse (31) est montée sur le capot de protection (11) et qu'elle est raccordée à celui-ci de manière à permettre un déplacement.

3. Lunette d'après la revendication 2,
**caractérisée en ce que,**
à l'endroit extérieur de la face frontale donnant sur le pièce à usiner (10), la réglette racleuse (31) possède un retrait et que les ouvertures de sortie (33, 33', 33") sont pratiquées dans la partie étagée de la réglette racleuse (31).

4. Lunette d'après les revendications 2 ou 3,
**caractérisée en ce que**
les canaux d'arrivée (32, 32', 32") de la réglette racleuse (31') se laissent brancher sur les canaux d'arrivée (16, 16', 16", 17, 17', 17") prévus dans le capot de protection (11) par l'intermédiaire d'un retrait (18) prévu dans les faces frontales s'opposant du capot de protection (11) et/ou dans la réglette racleuse (31').

5. Lunette d'après une des revendications 2 à 4,
**caractérisée en ce que**
les canaux de sortie (33, 33', 33") pratiqués dans la réglette racleuse (31') et/ou les canaux d'arrivée (15, 15', 15") prévus dans le capot de protection (11), sont réalisés par des perçages dont les extrémités éloignées de la pièce à usiner (10) sont obturées p. ex. par des bouchons.

6. Lunette d'après une des revendications 1 à 5,
**caractérisée en ce que**
la réglette racleuse (31) se laisse fixer de manière déplaçable sur le capot de protection (11) moyennant des vis (36) allant dans les trous oblongs (35) prévus dans celle-ci.

7. Lunette d'après la revendication 1,
**caractérisée en ce que**
la réglette racleuse (31') est prévue dans un évidement à section transversale sous la forme d'une fente, prévu dans le capot de protection (11), de manière à ce qu'elle se laisse déplacer en direction de la pièce à usiner (10), de préférence radialement par rapport à un cercle de base.

8. Lunette d'après la revendication 7,
**caractérisée en ce que**
sur un ou sur les deux côtés longitudinaux, le capot de protection (11) possède un retrait allant jusqu'à la portée de la réglette racleuse (31') sur le capot de protection (11), et que à ces endroits il est prévu dans le capot de protection (11) des trous taraudés dans lesquels sont retenus des vis (36) allant dans des trous oblongs (35) prévus dans la réglette racleuse (31').

9. Lunette d'après les revendications 8 ou 7,
**caractérisée en ce que**
par rapport à la face frontale de la partie intérieure, la face frontale de la partie extérieure du capot de protection (11) limitant l'évidement (21), est conçue en retrait en direction de la pièce à usiner (10).

10. Lunette d'après une des revendications 1 à 9,
**caractérisée en ce que,**
en cas de plusieurs canaux de sortie (33, 33', 33" ou 16, 16', 16") pratiqués dans la réglette racleuse (31) et/ou dans le capot de protection (11), leurs canaux d'arrivée (15, 15', 15") sont raccordés entre eux par un perçage transversal (14) disposé de préférence directement après le passage de l'élément de retenue (2) au capot de protection (11).

11. Lunette d'après une des revendications 1 à 10,
**caractérisée en ce que**
les canaux de sortie (16, 16', 16" ou 33, 33', 33") pratiqués dans le capot de protection (11) et/ou dans la réglette racleuse (31) sont munis respectivement d'une buse de pulvérisation (37).
